# EUROPÄISCHE PATENTSCHRIFT

(11) **EP 4 140 923 B1**
(45) Veröffentlichungstag und Bekanntmachung des Hinweises auf die Patenterteilung: **20.08.2025**
(21) Anmeldenummer: 21193607.5
(22) Anmeldetag: 27.08.2021
(51) Int. Cl.: B65G 43/00, B64D 9/00, B64C 1/20

(54) **DYNAMISCH GEREGELTES FRACHTLADESYSTEM FÜR EIN LUFTFAHRZEUG**
DYNAMICALLY CONTROLLED CARGO LOADING SYSTEM FOR AIRCRAFT
SYSTÈME DE CHARGEMENT DE FRET À COMMANDE DYNAMIQUE POUR UN AÉRONEF

(43) Veröffentlichungstag der Anmeldung: 01.03.2023
(73) Patentinhaber: Airbus Operations GmbH, 21129 Hamburg (DE)
(72) Erfinder: FISCHER, Dennis, 21129 Hamburg (DE); NÜSSEN, Oliver, 21129 Hamburg (DE); SCHERENBERGER, Sven, 21129 Hamburg (DE)
(74) Vertreter: Isarpatent

(56) Entgegenhaltungen:
- EP-A1- 2 675 709
- EP-A2- 0 937 643
- EP-A2- 2 444 320
- WO-A2-02/079071
- CA-A1- 2 373 692
- DE-A1- 102010 035 099
- DE-A1- 102011 051 007
- US-A1- 2012 175 225
- US-A1- 2012 290 126
- US-A1- 2017 327 315

## Beschreibung

Die vorliegende Erfindung betrifft ein dynamisch geregeltes Frachtladesystem für ein Luftfahrzeug.

Frachtstücke wie Container oder Paletten oder dergleichen werden üblicherweise mit Hilfe von Frachtladesystemen an die für sie vorgesehenen Positionen innerhalb des Laderaums eines Flugzeugs verbracht, an welchen sie dann mittels Riegelelementen befestigt und gesichert werden. Hierbei werden typischerweise unterschiedliche elektrische Frachtfördereinrichtungen eingesetzt, um die Frachtstücke in und durch den Laderaum zu transportieren. Beispielsweise werden Ladeplattformen, Transportbänder, Rollenförderer usw. verwendet, um die Frachtstücke in den Laderaum einzubringen. Dort können sie anschließend über elektromechanische Antriebseinheiten wie Power Drive Units (PDU), Rollenmatten, Antriebsrollen usw. entlang des Frachtladedecks innerhalb des Laderaums bewegt werden.

Während klassische Frachtladesysteme häufig noch von mehreren Operatoren händisch zu bedienen und zu überwachen sind, gibt es neuerdings einen zunehmenden Trend, unterschiedliche Aspekte derartiger Systeme verstärkt zu computerisieren und/oder zu automatisieren, um den Ladeprozess schneller, effizienter und reibungsloser zu gestalten. So beschreibt beispielsweise die Druckschrift US 10,005,564 B1 ein autonomes Frachtladesystem und -verfahren. Weiterhin beschreibt die Druckschrift DE 10 2011 000 819 A1 ein Frachtladesystem, welches über einen Computer gesteuert wird. WO 02/079071 offenbart auch ein autonomes Frachtladensystem.

Vor diesem Hintergrund liegt der vorliegenden Erfindung die Aufgabe zugrunde, Lösungen für optimierte Frachtladesysteme zu finden, welche die tatsächlichen operativen Bedingungen besser berücksichtigen.

Erfindungsgemäß wird diese Aufgabe gelöst durch ein Frachtladesystem mit den Merkmalen des Patentanspruchs 1 und ein Luftfahrzeug mit den Merkmalen des Patentanspruchs 12.

Eine der vorliegenden Erfindung zugrunde liegende Idee besteht darin, ein Frachtladesystem mit einem Regelungs- bzw. Steuerungskonzept auszustatten, welches mehrere interne und externe Systemparameter dynamisch berücksichtigt, um den Ladevorgang im Hinblick auf Energieverbrauch, Langzeitzuverlässigkeit, mechanische Belastungen, Verschleiß von Bauteilen, Be-/Entladezeit und Betriebsaufwand zu optimieren. Die heutzutage in vielen Flugzeugen eingesetzten Frachtladesystemen bewegen ihre Ladevorrichtungen dementgegen auf der Basis globaler und/oder konstanter Systemparameter und nicht auf der Grundlage der tatsächlich vorliegenden Betriebsbedingungen. Damit sind herkömmliche Ladesysteme weitaus weniger flexibel und relativ ineffizient, insbesondere in Fällen, in denen die operativen Bedingungen in stärkerem Maßen von geplanten oder Regelzuständen abweichen.

In diesem Sinne wird ein intelligentes Frachtladesystem geschaffen, bei welchem mehrere elektrische Transport- und/oder Antriebseinrichtungen mittels direkten oder indirekten Geschwindigkeitssensoren und Mitteln zur Messung von elektrischen Strömen, Spannungen und Leistungen überwacht werden. Die Sensoren und Messeinrichtungen können dabei in die Systemkomponenten integriert sein (d.h. z.B. die Frachtfördereinrichtungen) oder eigenständig in und/oder an dem Frachtladedeck bereitgestellt werden. Eine Steuereinrichtung führt einen Steuerungsalgorithmus aus, welcher die Messdaten auswertet und die Betriebszustände der Transporteinrichtungen, d.h. insbesondere deren Leistungsaufnahme und/oder deren Fördergeschwindigkeiten, geeignet regelt. Die Steuerung kann hierzu ebenfalls in eine oder mehrere der Systemkomponenten integriert sein und/oder als externe Ressource bereitgestellt werden. Die Systemkomponenten können dabei drahtlos oder über eine oder mehrere Datenleitungen, wie beispielsweise einem Datenbus, kommunikativ miteinander verbunden werden. Ein oder mehrere Displays können in und/oder an dem Frachtladedeck zur Anzeige von Systemzuständen und Systemparametern verwendet werden. Das Frachtladesystem kann dabei datentechnisch an weitere Systeme des Luftfahrzeugs angeschlossen sein, z.B. ein Kabinenmanagementsystem, eine Luftfahrzeugsteuerung usw., und darüber hinaus beispielsweise mit Einrichtungen eines Flughafens kommunizieren.

Im Ergebnis wird ein verbessertes Frachtladesystem geschaffen, welches deutlich flexibler und anpassungsfähiger in Bezug auf die tatsächlich vorhandenen operativen Bedingungen ist. Weiterhin kann das Frachtladesystem effektiver, zuverlässiger und schlussendlich nachhaltiger über seine gesamte Lebenszeit hinweg betrieben werden.

Vorteilhafte Ausgestaltungen und Weiterbildungen ergeben sich aus den weiteren Unteransprüchen sowie aus der Beschreibung unter Bezugnahme auf die Figuren.

Die Steuereinrichtung ist dazu ausgebildet, die Fördergeschwindigkeiten der Frachtfördereinrichtungen fortlaufend gemäß einem charakteristischen elektrischen Leistungsprofil der Frachtfördereinrichtungen anzupassen.

In klassischen Frachtladesystemen ist häufig keine Regelung der Frachtfördereinrichtungen im Hinblick auf ihre Leistungsaufnahme vorgesehen. Dies bedeutet beispielsweise, dass eine Transporteinrichtung bei einem Wechsel in den Förderbetrieb direkt auf eine nominelle Betriebsleistung und eine sich daraus ergebende nominelle Fördergeschwindigkeit schaltet. Dadurch können im Betrieb regelmäßig erhebliche Ladungsspitzen auftreten, z.B. wenn mehrere Transporteinrichtungen gleichzeitig in den Fördermodus springen. Die elektrische Infrastruktur muss somit mit entsprechend leistungsfähigen Sicherungselementen ausgelegt werden, was die Kosten und die Komplexität eines entsprechenden Systems in die Höhe treiben kann.

Dadurch werden die Fördergeschwindigkeiten und damit die Leistungsaufnahmen der Frachtfördereinrichtungen kontinuierlich überwacht und basierend auf zugehörigen Leistungsprofilen geeignet (nach-) geregelt. Damit können einzelne Frachtfördereinrichtungen, (Unter-) Gruppen aus mehreren Frachtfördereinrichtungen oder alle Frachtfördereinrichtungen gemeinsam in optimierter Weise betrieben werden, um insbesondere Ladungsspitzen von vornherein zu vermeiden.

Die Steuereinrichtung ist dazu ausgebildet, die Frachtfördereinrichtungen bei Aktivierung eines Förderbetriebs jeweils mit einer elektrischen Startleistung zu betreiben, welche kleiner als eine elektrische Maximalleistung der jeweiligen Frachtfördereinrichtung ist, und die Startleistung anschließend schrittweise oder kontinuierlich zu steigern entsprechend einem charakteristischen elektrischen Leistungsprofil der jeweiligen Frachtfördereinrichtung.

Dies wird dazu genutzt, um einen "Soft-Start" der Frachtfördereinrichtungen zu realisieren. Wenn eine Frachtfördereinrichtung, z. B. eine PDU, ihren Betriebszustand in einen Fördermodus ändert, in welchem Antriebselemente wie Rollen oder dergleichen bewegt werden, um ein Frachtstück weiterzubewegen, so muss nicht zwangsweise eine maximal verfügbare Leistung aufgebracht werden. Stattdessen kann zunächst mit niedrigeren Werten begonnen werden, die kontinuierlich oder schrittweise bis zu dem gewünschten Nominalwert gesteigert werden können. Hierbei kann ein charakteristisches Kraft- /Leistungsprofil eingehalten werden, um Spitzen im Stromverbrauch bzw. der elektrischen Leistung zu vermeiden.

Gemäß einer Weiterbildung kann die Steuereinrichtung dazu ausgebildet sein, mehrere Frachtfördereinrichtungen gestaffelt hintereinander zu aktivieren und/oder ihre Fördergeschwindigkeit gestaffelt hintereinander zu ändern.

Wenn somit eine bestimmte Untergruppe der Frachtfördereinrichtungen (oder alle gemeinsam) in den Fördermodus wechseln sollen, so wird deren Bewegung nicht gleichzeitig aktiviert. Vielmehr werden sie in einem bestimmten zeitlichen Abstand zeitlich hintereinander versetzt aktiviert, um Leistungsspitzen zu vermeiden.

Gemäß einer Weiterbildung kann die Steuereinrichtung dazu ausgebildet sein, die elektrische Leistung zumindest einzelner Frachtfördereinrichtungen zu reduzieren, wenn eine elektrische Gesamtleistung der Frachtfördereinrichtungen und/oder eine elektrische Einzelleistung der jeweiligen Frachtfördereinrichtung einen vorgegebenen Grenzwert überschreitet.

Das System kann die zur Verfügung gestellte elektrische Leistung für jede Komponente und jede Funktion getrennt oder gemeinsam auf der Grundlage der gemessenen lokalen oder globalen elektrischen Größen regeln und damit die Leistungsaufnahme und den Stromverbrauch in Übereinstimmung mit einem vorgegebenen Optimierungsalgorithmus verbessern. Insbesondere kann dabei als Schutzmaßnahme eine vorübergehende Leistungsreduzierung an einer oberen Leistungsgrenze vorgenommen werden.

Gemäß einer Weiterbildung kann die Steuereinrichtung dazu ausgebildet sein, die elektrische Leistung zumindest einzelner Frachtfördereinrichtungen zu erhöhen, wenn zusätzliche elektrische Leistung verfügbar ist.

Alternativ oder zusätzlich kann damit also ebenso eine Leistungssteigerung berücksichtigt werden, um die Systemperformance ggf. zu verbessern, sofern entsprechende Ressourcen verfügbar sind.

Gemäß einer Weiterbildung kann die Steuereinrichtung dazu ausgebildet sein, die Fördergeschwindigkeit für ein Frachtstück gemäß einem abklingenden Geschwindigkeitsprofil herunterzufahren, um das Frachtstück in eine Ruheposition zu bringen, und/oder gemäß einem ansteigenden Geschwindigkeitsprofil hochzufahren, um das Frachtstück aus einer Ruheposition zu bewegen.

Neben einem Soft-Start kann somit auch ein "Soft-Stopp" umgesetzt werden. Bevor ein Frachtstück seine vorläufige oder endgültige Endposition erreicht, kann das System die Fördergeschwindigkeit entsprechend einem vorgegebenen Geschwindigkeitsprofil anpassen, um die mechanischen Lasten auf das Frachtstück und die Systemkomponenten zu minimieren.

Gemäß einer Weiterbildung kann die Steuereinrichtung dazu ausgebildet sein, die Fördergeschwindigkeit für ein Frachtstück in Abhängigkeit von einem charakteristischen Frachtstückparameter des Frachtstücks anzupassen. Dies kann insbesondere in Abhängigkeit von einem Gewicht des Frachtstücks als Frachtstückparameter erfolgen.

Somit kann basierend auf bestimmten Parametern wie beispielsweise Größe oder Gewicht des geförderten Frachtstücks die Transportgeschwindigkeit entsprechend einem vorgegebenen Geschwindigkeitsprofil angepasst werden, um für jedes Frachtstück eine maximale bzw. optimale individuelle Fördergeschwindigkeit zu ermöglichen. Die entsprechenden Parameter können dabei ggf. vor Ort über entsprechende Einrichtungen gemessen und/oder berechnet werden. Alternativ oder zusätzlich können diese auch anderweitig an das System weitergeleitet werden und/oder von diesem ausgelesen werden, z.B. durch Auslesen eines RFID-Tags an dem jeweiligen Frachtstück, eines QR-Codes oder andersgearteten Strichcodes oder dergleichen.

Gemäß einer Weiterbildung kann die Steuereinrichtung dazu ausgebildet sein, die Fördergeschwindigkeit bei der Übergabe eines Frachtstücks von einer ersten Frachtfördereinrichtung an eine zweite Frachtfördereinrichtung zwischen den beiden Frachtfördereinrichtungen zu synchronisieren.

So kann beispielsweise bei der Übergabe eines Frachtstücks von einem Bodengerät, z. B. einer Ladeplattform, einem Ladefahrzeug oder einem Förderband, an eine in dem Laderaum installierte Fördereinrichtung ein Geschwindigkeitsunterschied zwischen dem aufnehmenden Fördermittel und dem abgebenden Fördermittel von dem System entsprechend einem vorgegebenen Geschwindigkeits-/Lastprofil ausgeglichen werden, um einen beispielsweise durch Reibung verursachten mechanischen Verschleiß der Systemkomponenten aufgrund eines ansonsten vorhandenen Geschwindigkeitsunterschieds zu vermeiden. Ebenso können Geschwindigkeitsunterschiede zwischen unterschiedlichen Fördereinrichtungen innerhalb des Frachtraums ausgeglichen bzw. synchronisiert werden.

Gemäß einer Weiterbildung kann das Frachtladesystem ferner eine Vielzahl von Sicherungsriegeln zur Verriegelung der Frachtstücke in einer jeweiligen Ruheposition auf dem Frachtladedeck umfassen. Die Sicherungsriegel können dazu ausgebildet sein, zu jedem Zeitpunkt einen der drei folgenden Operationszustände einzunehmen: geöffnet, geschlossen und verriegelt. Ferner kann das Frachtladesystem eine Riegelüberwachung umfassen, welche dazu ausgebildet ist, die jeweils von den Sicherungsriegeln eingenommenen Operationszustände zu überwachen.

Es können somit in einer Ausbildung genau drei unterschiedliche Verriegelungszustände erkannt und voneinander getrennt werden: "geöffnet" (A), "geschlossen" (B) und "verriegelt" (C). Dies kann beispielsweise für die logische Auswertung wie folgt für jeden Riegel ausgedrückt werden: X = (C & /B & /A) OR (/C & B & /A) OR (/C & /B & A).

Die entsprechenden Zustände können für sämtliche im Frachtraum vorhandene Riegel zusammengetragen werden und entsprechend ausgewertet werden, damit beispielsweise entschieden werden kann, ob sämtliche Frachtstücke verladen und an ihren Bestimmungspositionen gesichert sind.

Gemäß einer Weiterbildung kann die Riegelüberwachung in die Steuereinrichtung des Frachtladesystems und/oder eine Luftfahrzeugsteuerung integriert oder damit kommunikativ verbunden sein.

Beispielsweise kann das Ladepersonal derart jederzeit von innerhalb oder außerhalb des Luftfahrzeugs den aktuellen Lade- und Sicherungszustand der Frachtstücke überprüfen. Zu diesem Zweck kann beispielsweise eine Anzeige in dem Frachtraum angebracht sein, über welche die entsprechenden Informationen angezeigt werden können. Weiterhin können die zugehörigen Daten über entsprechende Netzwerkverbindungen weitergeleitetet werden, z.B. an das Bodenpersonal, das Ladepersonal, das Bordpersonal und/oder einen Piloten des Luftfahrzeugs.

Die Frachtfördereinrichtungen weisen Antriebsrollen auf, welche dazu ausgebildet sind, sich aus einer horizontalen Ausrichtung in eine geneigte Ausrichtung auszurichten.

Eine Frachtfördereinrichtung kann zu diesem Zweck mit einem oder mehreren geeigneten Aktoren ausgestattet sein, welche eine oder mehrere Antriebsrollen der jeweiligen Frachtfördereinrichtung entsprechend gegenüber einer innerhalb des Frachtraums horizontalen Ausrichtung verstellen können, sodass beispielsweise ein leichter Neigungswinkel gegenüber einem Boden des Frachtraums eingestellt werden kann. Damit kann beispielsweise ein Versatz bzw. ein Rutschen der Frachtstücke entlang des Frachtraumbodens kompensiert werden. Durch die entsprechende Kompensation von ungleichmäßig ausbalancierten und/oder rutschenden Frachtstücken können mechanischen Beanspruchungen oder sogar Beschädigungen und beispielsweise auch ein Verklemmen der Frachtstücke vermieden werden.

Gemäß einer Weiterbildung kann die Steuereinrichtung dazu ausgebildet sein, eine Operationshistorie der Frachtfördereinrichtungen zu erfassen, mit operativen Vergleichsdatenprofilen abzugleichen und darauf aufbauend einen Funktionsstatus der Frachtfördereinrichtungen und/oder eine geschätzte verbleibende Operationslebenszeit der Frachtfördereinrichtungen auszugeben.

Hierzu können insbesondere die aufgenommenen Messgrößen wie Geschwindigkeiten und elektrische Kenngrößen ausgewertet und aufgezeichnet werden. Auf dieser Basis kann beispielsweise eine intelligente vorbeugende Wartung umgesetzt werden, bei welcher basierend auf einer Auswertung der entsprechenden Daten eine verbleibende Zeit bis zu einem außerplanmäßigen Versagen oder notwendigen Auswechseln der überwachten Komponenten abgeschätzt bzw. vorhergesagt werden. Ferner kann der aktuelle Funktionsstatus jeder Komponente ermittelt und an das System mitgeteilt werden, insb. noch bevor es zu einer symptomatischen Leistungsminderung kommt. Die zum Abgleich verwendeten Profile können dabei jederzeit und im Betrieb aktualisiert werden, z.B. basierend auf aktuellen systeminternen sowie systemexternen Daten, beispielsweise abgeleitet aus dem Betrieb einer aktiven Flugzeugflotte.

Es versteht sich dabei, dass das vorliegende Frachtladesystem weitere vorteilhafte Eigenschaften bereitstellen kann, wie sie für assistierte, mehr oder weniger automatisierte und/oder computerisierte Frachtladesysteme entwickelt werden oder entwickelt worden sind. Beispielsweise können die aktuellen Positionen der Frachtstücke überwacht werden und fortlaufend mit einem vorgegebenen digitalen Ladeplan und einer zugehörigen Ladesequenz abgeglichen und auch an flugzeuginterne Systeme und an externe Empfänger weiterkommuniziert werden. Ferner kann der Frachtraum mit geeigneter Sensorik ausgestattet sein, um Beschädigungen einer Frachtraumverkleidung (Wände, Decke etc.) oder den Systemkomponenten aufgrund eines Kontakts mit den Frachtstücken zu verhindern. Dies kann auch auf die Frachtraumdecke angewendet werden. Einzelne Frachtstücke können automatisch identifiziert werden, z.B. durch entsprechende Ausleseeinrichtungen am Eingang des Frachtraums. Das System kann weiterhin über geeignete Mittel (fern-) gesteuert und/oder überwacht werden, z.B. über einen tragbaren Computer oder ein anderes tragbares elektronisches Gerät oder dergleichen. Hiermit können dann insbesondere auch die Frachtstücke verfolgt werden und ihre Verriegelungszustände überprüft werden.

Die vorliegende Erfindung wird nachfolgend anhand der in den schematischen Figuren angegebenen Ausführungsbeispiele näher erläutert. Es zeigen dabei:
- Fig. 1: schematische perspektivische Draufsicht auf ein Frachtladedeck eines Luftfahrzeugs mit einem Frachtladesystem gemäß einer Ausführungsform der Erfindung; und
- Fig. 2: Detailansicht einer Frachtfördereinrichtung aus dem Frachtladesystem der Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

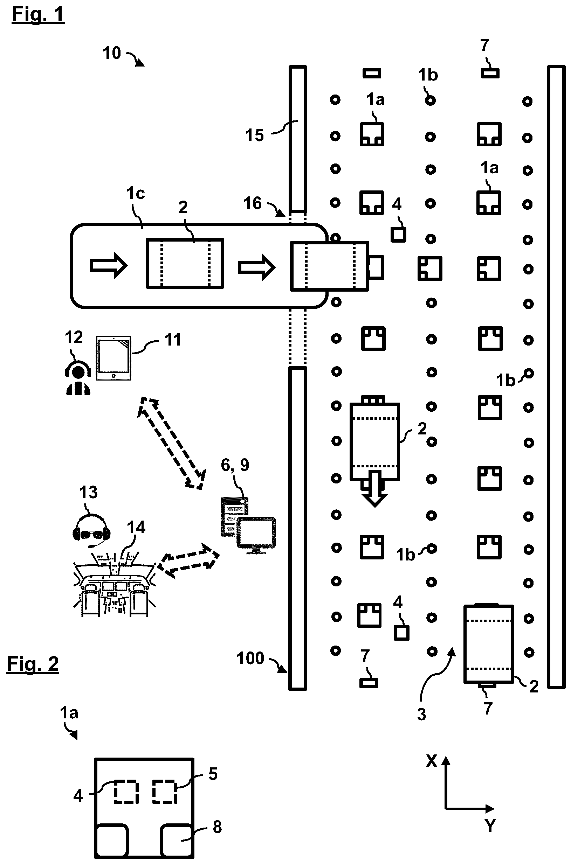

Figur 1 zeigt eine schematische perspektivische Draufsicht auf ein Frachtladedeck 3 eines Luftfahrzeugs 100 mit einem Frachtladesystem 10 gemäß einer Ausführungsform der Erfindung.

Das Frachtladedeck 3 ist im Wesentlichen rechteckig und erstreckt sich in der X-Y-Ebene des Luftfahrzeugs 100 (die X-Richtung entspricht der Längsrichtung des Flugzeugs und die Y-Richtung der Querrichtung) und ist durch Frachtraumwände 15 lateral begrenzt. Die linke Seitenwand ist dabei abschnittsweise zur Bildung einer Frachtraumtür 16 unterbrochen. Durch die Frachtraumtür 16 können Frachtstücke 2 in den Frachtraum des Luftfahrzeugs 100 eingebracht werden, z.B. ULD (Unit Load Device) wie Container oder Paletten, und dort auf dem Frachtladedeck 3 an eine vorgesehene Position bewegt werden.

Zum Transport der Frachtstücke 2 auf und über das Frachtladedeck 3 sind unterschiedlich ausgebildete Frachtfördereinrichtungen 1a-c bereitgestellt. Auf dem Frachtladedeck 3 können die Frachtstücke 2 mittels erster Frachtfördereinrichtungen 1a und zweiter Frachtfördereinrichtungen 1b bewegt werden. Die ersten Frachtfördereinrichtungen 1a sind vorliegend beispielhaft als PDU ausgebildet, d.h. elektrische betriebene Antriebseinheiten mit einer oder mehreren Antriebsrollen 8 (vgl. Fig. 2). Bei den zweiten Frachtfördereinrichtungen 1b handelt es sich hingegen um einfache Antriebsrollen. Zur Beförderung der Frachtstücke 2 auf das Frachtladedeck 3 ragt eine dritte Frachtfördereinrichtung 1c durch die Frachtraumtür 16 hindurch, z.B. ein elektrisch angetriebenes Transportband, welches auf einem Bodenfahrzeug montiert ist. Es versteht sich hierbei, dass die geschilderte Ausgestaltung der Frachtfördereinrichtungen 1a-c rein beispielhaft zu verstehen ist und auch andersgeartete Frachtfördereinrichtungen und Anordnungen bzw. Konfigurationen durch den Fachmann vorgesehen werden können.

Die Frachtstücke 2 können beim Durchfahren der Frachtraumtür 16 oder im Eingangsbereich des Frachtladedecks 3 automatisch über RFID-Sensoreinrichtungen oder andere Identifikationshilfsmittel identifiziert werden (nicht abgebildet), wobei beispielsweise eine Kennung samt relevanter Frachtstückparameter wie Größe, Gewicht usw. ausgelesen werden kann. Diese Kennung kann beispielsweise in einem RFID-Tag oder dergleichen gespeichert sein, das an dem Frachtstück 2 befestigt und/oder in dieses integriert ist. Anschließend kann jedes Frachtstück 2 über entsprechende Positionssensorik (ebenfalls nicht abgebildet) entlang seines Weges über das Frachtladedeck 3 bis an eine vorläufige oder endgültige Ruheposition verfolgt werden, an welcher es dann über einen oder mehrere Sicherungsriegel 7 gesichert werden kann.

Eine wesentliche Komponente des gezeigten Frachtladesystems 10 ist eine Steuereinrichtung 6, welche kommunikativ mit den unterschiedlichen Sensoren und Aktoren an und auf dem Frachtladedeck 3, insbesondere mit den elektrischen Frachtfördereinrichtungen 1a-c, in Verbindung steht. Die Steuereinrichtung 6 kann dabei mit entsprechender Hardware und Software ausgestattet sein, welche in und/oder außerhalb des Frachtraums installiert sein kann. Als Datenverbindungen kommen hierbei sowohl drahtgebundene (z.B. ein Datenbus) als auch drahtlose Netzwerke in Betracht. Über diese Netzwerke kann die Steuereinrichtung 6 ebenso mit einer Anzeige 11 einer Bedieneinrichtung des Bodenpersonals bzw. Ladepersonals 12 und/oder mit einer Luftfahrzeugsteuerung 14 des Bordpersonals verbunden sein, sodass aktuelle Informationen jederzeit an die entsprechend zuständigen Personen weitergeleitet werden können bzw. von diesen abrufbar sind.

Das Frachtladesystem 10 umfasst ferner Geschwindigkeitssensoren 4, welche dazu ausgebildet sind, aktuelle Fördergeschwindigkeiten der Frachtfördereinrichtungen 1a-c und/oder der geförderten Frachtstücke 2 zu erfassen. Bei den Geschwindigkeitssensoren 4 kann es sich einerseits um separate Einheiten handeln, die über das Frachtladedeck 3 oder anderweitig innerhalb des Frachtraums verteilt sind (vgl. Fig. 1). Andererseits können die Geschwindigkeitssensoren 4 ebenso in die Frachtfördereinrichtungen 1a-c integriert sein (vgl. Fig. 2). Weiterhin können die Geschwindigkeitssensoren 4 direkt die tatsächliche Bewegungsgeschwindigkeit der Frachtstücke 2 erfassen. Alternativ oder zusätzlich können sie jedoch ebenso eine an den Frachtfördereinrichtungen 1a-c eingestellte Transportgeschwindigkeit bestimmen, z.B. über Erfassung der Rotationsgeschwindigkeit einer Antriebsrolle. Dies kann beispielsweise auch indirekt erfolgen, indem Betriebsparameter der Frachtfördereinrichtungen 1a-c herangezogen werden, aus denen die eingestellte Fördergeschwindigkeit extrahiert bzw. abgeleitet werden kann. Eine Geschwindigkeitsbestimmung kann somit sowohl direkt als auch indirekt erfolgen.

Das Frachtladesystem 10 umfasst ferner elektrischen Messeinrichtungen 5, welche dazu ausgebildet sind, aktuelle elektrische Kenngrößen der Frachtfördereinrichtungen 1a-c zu erfassen. Geeignete elektrische Kenngrößen umfassen dabei beispielsweise elektrische Ströme, elektrischen Spannungen und insbesondere eine elektrische Leistung. Auch diese Messeinrichtungen 5 können insbesondere in die Frachtfördereinrichtungen 1a-c integriert sein (vgl. Fig. 2) oder zumindest an diese gekoppelt sein, um die entsprechenden Größen bestimmen zu können.

Die Steuereinrichtung 6 ist dabei dazu ausgebildet, die Frachtfördereinrichtungen 1a-c derart in Abhängigkeit von den erfassten aktuellen Fördergeschwindigkeiten und/oder den erfassten aktuellen elektrischen Kenngrößen zu steuern, dass ein elektrische Leistungsverbrauch der Frachtfördereinrichtungen 1a-c, ein mechanischer Verschleiß der Frachtfördereinrichtungen 1a-c, eine mechanische Lasteinwirkung auf die Frachtstücke 2, eine Beförderungszeit der Frachtstücke 2 und/oder eine Geräuschentwicklung während der Beförderung der Frachtstücke 2 optimiert wird. Im Folgenden werden mehrere Beispiele erläutert, wie dies konkret umgesetzt werden kann.

Die Steuereinrichtung 6 ist dazu ausgebildet, die Fördergeschwindigkeiten der Frachtfördereinrichtungen 1a-c fortlaufend gemäß einem charakteristischen elektrischen Leistungsprofil der Frachtfördereinrichtungen 1a-c anzupassen. Die Steuereinrichtung 6 ist dazu ausgebildet, die Frachtfördereinrichtungen 1a-c bei Aktivierung eines Förderbetriebs jeweils mit einer elektrischen Startleistung zu betreiben, welche kleiner als eine elektrische Maximalleistung der jeweiligen Frachtfördereinrichtung 1a-c ist. Die Startleistung wird anschließend schrittweise oder kontinuierlich gesteigert entsprechend einem charakteristischen elektrischen Leistungsprofil der jeweiligen Frachtfördereinrichtung 1a-c. Anders ausgedrückt, können die Frachtfördereinrichtungen 1a-c beim Umschalten in einen Transportmodus, z.B. wenn sie ein Frachtstück 2 übergeben bekommen, sanft hochfahren, um beispielsweise Leistungsspitzen zu vermeiden.

Im Falle, dass mehrere Frachtfördereinrichtung 1a-c in Kombination verwendet werden sollen, kann es vorgesehen sein, dass mehrere Frachtfördereinrichtungen 1a-c gestaffelt hintereinander von der Steuereinrichtung 6 aktivieren werden und/oder ihre Fördergeschwindigkeit gestaffelt hintereinander geändert wird, d.h. beispielsweise gestaffelt schrittweise hochgefahren wird, um entsprechend auch in diesem Fall Leistungsspitzen zu vermeiden.

In einer weiteren Ausführung kann die Steuereinrichtung 6 dazu ausgebildet sein, die elektrische Leistung zumindest einzelner Frachtfördereinrichtungen 1a-c zu reduzieren, wenn eine elektrische Gesamtleistung der Frachtfördereinrichtungen 1a-c und/oder eine elektrische Einzelleistung der jeweiligen Frachtfördereinrichtung 1a-c einen vorgegebenen Grenzwert überschreitet (Schutzfunktion). Entsprechend kann die Steuereinrichtung 6 ebenso dazu ausgebildet sein, die elektrische Leistung zumindest einzelner Frachtfördereinrichtungen 1a-c zu erhöhen, wenn zusätzliche elektrische Leistung verfügbar ist (Leistungssteigerung). In dieser Weise kann der elektrische Leistungsverbrauch optimiert und kontrolliert werden.

Ebenso wie die Frachtfördereinrichtungen 1a-c weich hochgefahren werden können, ist es weiterhin möglich, diese kontinuierlich oder in Einzelschritten wieder herunterzufahren, beispielsweise um ein Frachtstück 2 in eine vorläufigen oder endgültigen Endposition zu stoppen. Entsprechend kann die Steuereinrichtung 6 dazu ausgebildet sein, die Fördergeschwindigkeit für ein Frachtstück 2 gemäß einem abklingenden Geschwindigkeitsprofil herunterzufahren, um das Frachtstück 2 in eine Ruheposition zu bringen, und/oder gemäß einem ansteigenden Geschwindigkeitsprofil hochzufahren, um das Frachtstück 2 aus einer Ruheposition zu bewegen. Auf diese Weise können mechanische Lasten auf die Frachtstücke 2 und die Frachtfördereinrichtungen 1a-c möglichst gering gehalten werden.

Generell kann beim Transport der Frachtstücke 2 deren Fördergeschwindigkeit in Abhängigkeit von charakteristischen Frachtstückparametern angepasst werden, z.B. als Funktion der Größe oder des Gewichts der Frachtstücke 2, um einen möglichst effizienten und schnellen Verladungsprozess zu realisieren. In einem weiteren Beispiel kann die Fördergeschwindigkeit auf eine Empfindlichkeit des jeweiligen Frachtstücks 2 optimiert werden, z.B. im Zuge einer Schaden-Kosten-Abwägung im Falle eines Stoßes oder dergleichen.

Um den Übergang der Frachtstücke 2 zwischen den einzelnen Frachtfördereinrichtung 1a-c möglichst reibungslos und fließend zu gestalten, kann die Steuereinrichtung 6 dazu ausgebildet sein, die Fördergeschwindigkeit bei der Übergabe eines Frachtstücks 2 von einer ersten Frachtfördereinrichtung 1a-c an eine zweite Frachtfördereinrichtung 1a-c zwischen den beiden Frachtfördereinrichtungen 1a-c zu synchronisieren. In einem konkreten Beispiel kann ein Frachtstück 2 von einer als Transportband 1c ausgebildeten Frachtfördereinrichtung 1c an eine als PDU ausgebildete Frachtfördereinrichtung 1a übergeben werden (vgl. Fig. 1 links oben im Bereich der Frachtraumtür 16). Ein möglichst genauer Abgleich der einzelnen Fördergeschwindigkeiten minimiert dabei den mechanischen Verschleiß und erhöht somit die Lebensdauer der Einzelkomponenten.

Der reibungslose Transport und die Positionierung der Frachtstücke 2 werden weiterhin dadurch verbessert, dass jegliche Unebenheiten oder Toleranzen in der Förderebene beseitigt oder zumindest ausgeglichen werden. Eine vorteilhafte Lösung in diesem Sinne sieht vor, dass die Antriebsrollen 8 der Frachtfördereinrichtungen 1a-c dazu ausgebildet werden, sich aus einer horizontalen Ausrichtung in eine geneigte Ausrichtung auszurichten, um beispielsweise ein Verklemmen bzw. Blockieren der Frachtstücke 2 aufgrund von Ausrichtungstoleranzen zu vermeiden.

Um die Gesamtsystemperformance weiter zu verbessern, kann die Steuereinrichtung 6 eine Operationshistorie der Frachtfördereinrichtungen 1a-c erfassen und diese mit operativen Vergleichsdatenprofilen abgleichen. Beispielsweise können derartige Profile über den jahrelangen Betrieb einer Luftfahrzeugflotte generiert worden sein. Basierend auf einem derartigen Abgleich kann dann ggf. ein Funktionsstatus der Frachtfördereinrichtungen 1a-c und/oder eine geschätzte verbleibende Operationslebenszeit der Frachtfördereinrichtungen 1a-c bestimmt werden.

Neben den Frachtfördereinrichtungen 1a-c können auch weitere Komponenten oder Einrichtungen des Frachtladesystems 10 in die Steuerung bzw. Überwachung eingebunden werden. Beispielsweise können die bereits erwähnten Sicherungsriegel 7 durch eine Riegelüberwachung 8 verwaltet werden, die zum Beispiel in die Steuerung des Frachtladesystems 10 integriert sein kann und mit dem Bodenpersonal bzw. Ladepersonal 12 und/oder dem Bordpersonal 13 kommunizieren kann, wie z.B. dem sogenannten Load Master und/oder der Crew inklusive dem Piloten. In dieser Weise kann ein Operationszustand jedes der Sicherungsriegel 7 jederzeit kontrollierbar sein. Beispielsweise kann das Ladepersonal 12 überprüfen, ob die einzelnen Sicherungsriegel 7 geöffnet, geschlossen oder verriegelt sind. Derartige Information können beispielsweise über Displays dargestellt werden, z.B. auf einem Tabletcomputer.

Es versteht sich dabei, dass die obigen beispielhaften Ausführungen beliebig miteinander kombiniert werden können. Im Ergebnis wird somit ein verbessertes Frachtladesystem bereitgestellt, welches sich in automatisierter Weise an die jeweiligen tatsächlichen operativen Bedingungen anpassen kann und damit nicht nur die Leistungsfähigkeit und Geschwindigkeit des Ladevorgangs verbessern kann, sondern ebenso dabei hilft, die langfristige Funktionsfähigkeit und Zuverlässigkeit der Frachtstückbeladung und -entladung zu steigern.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet.

Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1a-c: Frachtfördereinrichtung
- 2: Frachtstück
- 3: Frachtladedeck
- 4: Geschwindigkeitssensor
- 5: Messeinrichtung
- 6: Steuereinrichtung
- 7: Sicherungsriegel
- 8: Antriebsrolle
- 9: Riegelüberwachung
- 10: Frachtladesystem
- 11: Anzeige
- 12: Ladepersonal/Bodenpersonal
- 13: Bordpersonal
- 14: Luftfahrzeugsteuerung
- 15: Frachtraumwand
- 16: Frachtraumtür
- 100: Luftfahrzeug

## Patentansprüche

1. Dynamisch geregeltes Frachtladesystem (10) für ein Luftfahrzeug (100), mit:
elektrischen Frachtfördereinrichtungen (1a-c) zum Befördern von Frachtstücken (2) auf einem Frachtladedeck (3);
Geschwindigkeitssensoren (4), welche dazu ausgebildet sind, aktuelle Fördergeschwindigkeiten der Frachtfördereinrichtungen (1a-c) und/oder der geförderten Frachtstücke (2) zu erfassen;
elektrischen Messeinrichtungen (5), welche dazu ausgebildet sind, aktuelle elektrische Kenngrößen der Frachtfördereinrichtungen (1a-c) zu erfassen; und
einer Steuereinrichtung (6), welche dazu ausgebildet, die Frachtfördereinrichtungen (1a-c) derart in Abhängigkeit von den erfassten aktuellen Fördergeschwindigkeiten und/oder den erfassten aktuellen elektrischen Kenngrößen zu steuern, dass zumindest eine der folgenden Größen optimiert wird: elektrischer Leistungsverbrauch der Frachtfördereinrichtungen (1a-c), mechanischer Verschleiß der Frachtfördereinrichtungen (1a-c), mechanische Lasteinwirkung auf die Frachtstücke (2), Beförderungszeit der Frachtstücke (2) und Geräuschentwicklung während der Beförderung der Frachtstücke (2), wobei das Frachtladesystem **dadurch gekennzeichnet ist, dass** die Steuereinrichtung (6) dazu ausgebildet ist, die Frachtfördereinrichtungen (1a-c) bei Aktivierung eines Förderbetriebs jeweils mit einer elektrischen Startleistung zu betreiben, welche kleiner als eine elektrische Maximalleistung der jeweiligen Frachtfördereinrichtung (1a-c) ist, und die Startleistung anschließend schrittweise oder kontinuierlich zu steigern entsprechend einem charakteristischen elektrischen Leistungsprofil der jeweiligen Frachtfördereinrichtung (1a-c);
wobei die Frachtfördereinrichtungen (1a-c) Antriebsrollen (8) aufweisen, welche dazu ausgebildet sind, sich aus einer horizontalen Ausrichtung in eine geneigte Ausrichtung auszurichten.

2. Frachtladesystem (10) nach Anspruch 1, wobei die Steuereinrichtung (6) dazu ausgebildet ist, die Fördergeschwindigkeiten der Frachtfördereinrichtungen (1a-c) fortlaufend gemäß einem charakteristischen elektrischen Leistungsprofil der Frachtfördereinrichtungen (1a-c) anzupassen.

3. Frachtladesystem (10) nach Anspruch 1 oder 2, wobei die Steuereinrichtung (6) dazu ausgebildet ist, mehrere Frachtfördereinrichtungen (1a-c) gestaffelt hintereinander zu aktivieren und/oder ihre Fördergeschwindigkeit gestaffelt hintereinander zu ändern.

4. Frachtladesystem (10) nach einem der Ansprüche 1 bis 3, wobei die Steuereinrichtung (6) dazu ausgebildet ist, die elektrische Leistung zumindest einzelner Frachtfördereinrichtungen (1a-c) zu reduzieren, wenn eine elektrische Gesamtleistung der Frachtfördereinrichtungen (1a-c) und/oder eine elektrische Einzelleistung der jeweiligen Frachtfördereinrichtung (1a-c) einen vorgegebenen Grenzwert überschreitet.

5. Frachtladesystem (10) nach einem der Ansprüche 1 bis 4, wobei die Steuereinrichtung (6) dazu ausgebildet ist, die elektrische Leistung zumindest einzelner Frachtfördereinrichtungen (1a-c) zu erhöhen, wenn zusätzliche elektrische Leistung verfügbar ist.

6. Frachtladesystem (10) nach einem der Ansprüche 1 bis 5, wobei die Steuereinrichtung (6) dazu ausgebildet ist, die Fördergeschwindigkeit für ein Frachtstück (2) gemäß einem abklingenden Geschwindigkeitsprofil herunterzufahren, um das Frachtstück (2) in eine Ruheposition zu bringen, und/oder gemäß einem ansteigenden Geschwindigkeitsprofil hochzufahren, um das Frachtstück (2) aus einer Ruheposition zu bewegen.

7. Frachtladesystem (10) nach einem der Ansprüche 1 bis 6, wobei die Steuereinrichtung (6) dazu ausgebildet ist, die Fördergeschwindigkeit für ein Frachtstück (2) in Abhängigkeit von einem charakteristischen Frachtstückparameter des Frachtstücks (2) anzupassen, insbesondere in Abhängigkeit von einem Gewicht des Frachtstücks (2).

8. Frachtladesystem (10) nach einem der Ansprüche 1 bis 7, wobei die Steuereinrichtung (6) dazu ausgebildet ist, die Fördergeschwindigkeit bei der Übergabe eines Frachtstücks (2) von einer ersten Frachtfördereinrichtung (1a-c) an eine zweite Frachtfördereinrichtung (1a-c) zwischen den beiden Frachtfördereinrichtungen (1a-c) zu synchronisieren.

9. Frachtladesystem (10) nach einem der Ansprüche 1 bis 8, ferner umfassend:
eine Vielzahl von Sicherungsriegeln (7) zur Verriegelung der Frachtstücke (2) in einer jeweiligen Ruheposition auf dem Frachtladedeck (3), wobei die Sicherungsriegel (7) dazu ausgebildet sind, zu jedem Zeitpunkt einen der drei folgenden Operationszustände einzunehmen: geöffnet, geschlossen und verriegelt; und
eine Riegelüberwachung (8), welche dazu ausgebildet ist, die jeweils von den Sicherungsriegeln (7) eingenommenen Operationszustände zu überwachen.

10. Frachtladesystem (10) nach Anspruch 9, wobei die Riegelüberwachung (8) in die Steuereinrichtung (6) des Frachtladesystems (10) und/oder eine Luftfahrzeugsteuerung (14) integriert oder damit kommunikativ verbunden ist.

11. Frachtladesystem (10) nach einem der Ansprüche 1 bis 10, wobei die Steuereinrichtung (6) dazu ausgebildet ist, eine Operationshistorie der Frachtfördereinrichtungen (1a-c) zu erfassen, mit operativen Vergleichsdatenprofilen abzugleichen und darauf aufbauend einen Funktionsstatus der Frachtfördereinrichtungen (1a-c) und/oder eine geschätzte verbleibende Operationslebenszeit der Frachtfördereinrichtungen (1a-c) auszugeben, wobei hierzu die erfassten aktuellen Fördergeschwindigkeiten und elektrischen Kenngrößen aufgezeichnet und ausgewertet werden.

12. Luftfahrzeug (100) mit einem Frachtladesystem (10) nach einem der Ansprüche 1 bis 11.

## Claims

1. Dynamically controlled cargo loading system (10) for an aircraft (100), comprising:
electrical cargo conveying devices (1a-c) for conveying cargo items (2) on a cargo loading deck (3);
speed sensors (4), which are configured to detect current conveying speeds of the cargo conveying devices (1a-c) and/or of the conveyed cargo items (2);
electrical measuring devices (5), which are configured to detect current electrical characteristic values of the cargo conveying devices (1a-c);
and a control device (6), which is configured to control the cargo conveying devices (1a-c) in dependence on the detected current conveying speeds and/or the detected current electrical characteristic values, such that at least one of the following parameters is optimized:
electrical power consumption of the cargo conveying devices (1a-c),
mechanical wear of the cargo conveying devices (1a-c),
mechanical load impact on the cargo items (2),
conveying time of the cargo items (2), and
noise development during the conveying of the cargo items (2), wherein the cargo loading system is **characterized in that** the control device (6) is configured to operate the cargo conveying devices (1a-c) upon activation of a conveying operation each with an electrical starting power, which is less than an electrical maximum power of the respective cargo conveying device (1a-c) , and to subsequently increase the starting power stepwise or continuously according to a characteristic electrical power profile of the respective cargo conveying device (1a-c); wherein the cargo conveying devices (1a-c) comprise drive rollers (8), which are configured to align themselves from a horizontal orientation into an inclined orientation.

2. Cargo loading system (10) according to claim 1, wherein the control device (6) is configured to continuously adapt the conveying speeds of the cargo conveying devices (1a-c) according to a characteristic electrical power profile of the cargo conveying devices (1a-c).

3. Cargo loading system (10) according to claim 1 or 2, wherein the control device (6) is configured to activate several cargo conveying devices (1a-c) staggered one after the other and/or to change their conveying speed staggered one after the other.

4. Cargo loading system (10) according to one of claims 1 to 3, wherein the control device (6) is configured to reduce the electrical power of at least individual cargo conveying devices (1a-c) if an electrical total power of the cargo conveying devices (1a-c) and/or an electrical individual power of the respective cargo conveying device (1a-c) exceeds a predetermined limit value.

5. Cargo loading system (10) according to one of claims 1 to 4, wherein the control device (6) is configured to increase the electrical power of at least individual cargo conveying devices (1a-c) if additional electrical power is available.

6. Cargo loading system (10) according to one of claims 1 to 5, wherein the control device (6) is configured to reduce the conveying speed for a cargo item (2) according to a decaying speed profile to bring the cargo item (2) into a resting position, and/or to increase it according to an ascending speed profile to move the cargo item (2) from a resting position.

7. Cargo loading system (10) according to one of claims 1 to 6, wherein the control device (6) is configured to adapt the conveying speed for a cargo item (2) depending on a characteristic cargo item parameter of the cargo item (2), in particular depending on a weight of the cargo item (2).

8. Cargo loading system (10) according to one of claims 1 to 7, wherein the control device (6) is configured to synchronize the conveying speed between the two cargo conveying devices (1a-c) during the transfer of a cargo item (2) from a first cargo conveying device (1a-c) to a second cargo conveying device (1a-c).

9. Cargo loading system (10) according to one of claims 1 to 8, further comprising:
a plurality of securing latches (7) for locking the cargo items (2) in a respective resting position on the cargo loading deck (3), wherein the securing latches (7) are configured to assume one of the three following operational states at all times: open, closed and locked;
and a latch monitoring (8), which is configured to monitor the operational states assumed respectively by the securing latches (7).

10. Cargo loading system (10) according to claim 9, wherein the latch monitoring (8) is integrated into or communicatively connected with the control device (6) of the cargo loading system (10) and/or an aircraft control (14).

11. Cargo loading system (10) according to one of claims 1 to 10, wherein the control device (6) is configured to record an operational history of the cargo conveying devices (1a-c), to compare it with operational comparison data profiles, and based thereon, to output a functional status of the cargo conveying devices (1a-c) and/or an estimated remaining operational lifetime of the cargo conveying devices (1a-c), wherein for this purpose, the detected current conveying speeds and electrical characteristic values are recorded and evaluated.

12. Aircraft (100) with a cargo loading system (10) according to one of claims 1 to 11.

## Revendications

1. Système de chargement de fret (10) régulé dynamiquement pour un aéronef (100), comprenant :
des dispositifs de transport de fret électriques (1a-c) pour transporter des pièces de fret (2) sur un pont de chargement de fret (3);
des capteurs de vitesse (4), qui sont conçus pour détecter les vitesses de transport actuelles des dispositifs de transport de fret (1a-c) et/ou des pièces de fret (2) transportées;
des dispositifs de mesure électriques (5), qui sont conçus pour détecter les paramètres électriques actuels des dispositifs de transport de fret (1a-c);
et un dispositif de commande (6), qui est conçu pour commander les dispositifs de transport de fret (1a-c) en fonction des vitesses de transport actuelles détectées et/ou des paramètres électriques actuels détectés, de sorte qu'au moins l'une des grandeurs suivantes est optimisée:
la consommation d'énergie électrique des dispositifs de transport de fret (1a-c),
l'usure mécanique des dispositifs de transport de fret (1a-c),
la contrainte mécanique sur les pièces de fret (2),
le temps de transport des pièces de fret (2), et
le développement du bruit pendant le transport des pièces de fret (2), le système de chargement de fret étant **caractérisé en ce que** le dispositif de commande (6) est conçu pour faire fonctionner les dispositifs de transport de fret (1a-c) lors de l'activation d'un mode de transport avec une puissance de démarrage électrique qui est inférieure à une puissance maximale électrique du dispositif de transport de fret (1a-c) respectif, et à augmenter ensuite la puissance de démarrage progressivement ou continuellement selon un profil de puissance électrique caractéristique du dispositif de transport de fret (1a-c) respectif; où les dispositifs de transport de fret (1a-c) comprennent des rouleaux d'entraînement (8) qui sont conçus pour s'aligner d'une orientation horizontale à une orientation inclinée.

2. Système de chargement de fret (10) selon la revendication 1, dans lequel le dispositif de commande (6) est conçu pour ajuster en continu les vitesses de transport des dispositifs de transport de fret (1a-c) selon un profil de puissance électrique caractéristique des dispositifs de transport de fret (1a-c).

3. Système de chargement de fret (10) selon la revendication 1 ou 2, dans lequel le dispositif de commande (6) est conçu pour activer plusieurs dispositifs de transport de fret (1a-c) en séquence décalée et/ou pour modifier leur vitesse de transport en séquence décalée.

4. Système de chargement de fret (10) selon l'une quelconque des revendications 1 à 3, dans lequel le dispositif de commande (6) est conçu pour réduire la puissance électrique d'au moins certains dispositifs de transport de fret (1a-c) lorsqu'une puissance électrique totale des dispositifs de transport de fret (1a-c) et/ou une puissance électrique individuelle du dispositif de transport de fret (1a-c) respectif dépasse une valeur limite prédéfinie.

5. Système de chargement de fret (10) selon l'une quelconque des revendications 1 à 4, dans lequel le dispositif de commande (6) est conçu pour augmenter la puissance électrique d'au moins certains dispositifs de transport de fret (1a-c) lorsqu'une puissance électrique supplémentaire est disponible.

6. Système de chargement de fret (10) selon l'une quelconque des revendications 1 à 5, dans lequel le dispositif de commande (6) est conçu pour réduire la vitesse de transport pour une pièce de fret (2) selon un profil de vitesse décroissant afin d'amener la pièce de fret (2) dans une position de repos, et/ou pour augmenter celle-ci selon un profil de vitesse croissant afin de déplacer la pièce de fret (2) d'une position de repos.

7. Système de chargement de fret (10) selon l'une quelconque des revendications 1 à 6, dans lequel le dispositif de commande (6) est conçu pour ajuster la vitesse de transport pour une pièce de fret (2) en fonction d'un paramètre caractéristique de la pièce de fret (2), en particulier en fonction d'un poids de la pièce de fret (2).

8. Système de chargement de fret (10) selon l'une quelconque des revendications 1 à 7, dans lequel le dispositif de commande (6) est conçu pour synchroniser la vitesse de transport entre les deux dispositifs de transport de fret (1a-c) lors du transfert d'une pièce de fret (2) d'un premier dispositif de transport de fret (1a-c) à un second dispositif de transport de fret (1a-c).

9. Système de chargement de fret (10) selon l'une quelconque des revendications 1 à 8, comprenant en outre :
une pluralité de verrous de sécurité (7) pour verrouiller les pièces de fret (2) dans une position de repos respective sur le pont de chargement de fret (3), les verrous de sécurité (7) étant conçus pour prendre à tout moment l'un des trois états de fonctionnement suivants : ouvert, fermé et verrouillé;
et une surveillance de verrou (8), qui est conçue pour surveiller les états de fonctionnement pris respectivement par les verrous de sécurité (7).

10. Système de chargement de fret (10) selon la revendication 9, dans lequel la surveillance de verrou (8) est intégrée ou connectée de manière communicative au dispositif de commande (6) du système de chargement de fret (10) et/ou à une commande d'aéronef (14).

11. Système de chargement de fret (10) selon l'une quelconque des revendications 1 à 10, dans lequel le dispositif de commande (6) est conçu pour enregistrer un historique de fonctionnement des dispositifs de transport de fret (1a-c), pour le comparer avec des profils de données de comparaison opérationnelles et, sur cette base, pour émettre un état fonctionnel des dispositifs de transport de fret (1a-c) et/ou une durée de vie opérationnelle restante estimée des dispositifs de transport de fret (1a-c), les vitesses de transport actuelles et les paramètres électriques détectés étant enregistrés et évalués à cette fin.

12. Aéronef (100) avec un système de chargement de fret (10) selon l'une quelconque des revendications 1 à 11.
